# FASCICULE DE BREVET EUROPEEN

(11) **EP 3 323 661 B1**
(45) Date de publication et mention de la délivrance du brevet: **15.04.2020**
(21) Numéro de dépôt: 17202070.3
(22) Date de dépôt: 16.11.2017
(51) Int. Cl.: B60L 5/42, B60M 1/36

(54) **SYSTÈME DE TRANSPORT À ALIMENTATION ÉLECTRIQUE PAR LE SOL**
TRANSPORTSYSTEM MIT STROMEINSPEISUNG ÜBER DEN BODEN
CONVEYOR SYSTEM WITH POWER SUPPLY CONNECTED INTO THE GROUND

(30) Priorité: 16.11.2016 FR 1661094
(43) Date de publication de la demande: 23.05.2018
(73) Titulaire: ALSTOM Transport Technologies, 93400 Saint-Ouen (FR)
(72) Inventeur: HOURTANE, Jean-Luc, 13320 Bouc Bel Air (FR)
(74) Mandataire: Lavoix

(56) Documents cités:
- EP-A1- 2 993 075
- FR-A1- 2 940 201

## Description

La présente invention concerne un système de transport à alimentation électrique par le sol comprenant :
- un véhicule électrique non guidé comportant des moyens de captage de l'énergie électrique permettant de recevoir un courant par contact avec des bornes ponctuelles de distribution électrique lors du roulage ;
- un réseau d'alimentation électrique au sol comportant, disposées au sol suivant le parcours du véhicule, des bornes ponctuelles de distribution électrique et des boitiers de puissance d'alimentation de ces bornes ;
- des moyens d'activation et de désactivation électrique des bornes ponctuelles de distribution électrique en fonction de la position du véhicule.

Le tramway et le trolleybus sont généralement alimentés en courant par des caténaires appelées lignes aériennes de contact (LAC).

Toutefois, ces caténaires sont disgracieuses et dénaturent le paysage urbain.

Il existe de nombreuses solutions techniques permettant de supprimer ces nuisances visuelles et de préserver les sites historiques.

Les bus électriques autonomes fonctionnant uniquement à l'aide de batteries sont connus. Mais cette technologie présente une faible capacité d'accumulation, un rendement énergétique médiocre, une lenteur de charge et un coût important des moyens d'accumulation.

Il est également connu un dispositif d'alimentation en énergie électrique pour véhicule urbain de transport en commun décrit dans FR 2 910 391. Ce dispositif permet d'alimenter un tramway en courant électrique sur des tronçons de captage à l'arrêt et en roulage par contact aérien depuis des bornes d'alimentation ponctuelles portées par des poteaux et situées au-dessus du parcours du véhicule. Cette solution a pour principal inconvénient de ne pas totalement supprimer la nuisance visuelle car les tronçons de captage sont équipés de poteaux distributeurs.

On peut citer aussi l'alimentation par le sol pour les tramways. L'alimentation électrique se fait par l'intermédiaire d'un rail central, divisé en sections isolées les unes des autres, sur lequel frottent deux conducteurs fixés en série sous le tramway, le retour du courant se faisant par les rails de roulement.

Pour des raisons de sécurité, seule la section placée sous le tramway est alimentée en courant.

Chaque section, séparée de ses voisines par une zone électriquement isolée, est utilisée successivement pour amener le courant en fonction de la position instantanée du tramway.

La contrainte sécuritaire oblige à localiser les deux patins frotteurs vers le milieu du tramway, d'une part, afin que le segment alimenté soit toujours sous le tramway et d'autre part, pour tenir compte de la distance parcourue par le tramway avant que la coupure d'alimentation du segment ne soit effective.

Il existe une autre solution d'alimentation sans caténaire, appelée Solution de Recharge Stationnaire, qui consiste en une recharge rapide en électricité par le sol lors de l'arrêt du véhicule. Cette technologie est adaptée à la fois aux tramways et aux bus électriques équipés de moyens de stockage de l'énergie électrique.

Pendant les arrêts en station, des frotteurs, fixés sous le véhicule, captent par contact le courant, soit par au moins deux bornes parallèles de rechargement dans le cas du bus, soit par un rail d'alimentation dans le cas du tramway. L'énergie peut être récupérée en moins de 20 secondes et stockée dans les supercondensateurs ou en moins de quelques minutes et stockée dans des batteries.

Ce système de rechargement n'est actif que lorsque le véhicule est à l'arrêt et nécessite des éléments de stockage d'énergie à forte capacité d'accumulation pour assurer le trajet entre deux stations.

Un trolleybus alimenté par le sol est décrit dans la demande de brevet WO2011054181. Le véhicule est équipé de deux larges patins articulés, localisés sous le véhicule, qui frottent des plots ronds de distribution de courant électrique fixés à intervalle régulier sur la route, en exerçant une pression mécanique suffisamment forte pour enfoncer ces plots dans le sol afin d'établir le contact avec le réseau électrique souterrain.

Outre que le système n'est pas sans danger pour la protection des piétons, il impose un nombre très élevé de plots sur la route.

Enfin, on peut citer l'OLEV (On-Line Electric Vehicle), un bus électrique qui a la particularité d'être alimenté sans contact au moyen de bandes électromagnétiques à induction discontinues et enterrées sous la chaussée. Le bus recharge ses batteries par induction lors de son passage sur les portions de route équipées de bandes électromagnétiques.

L'alimentation des bobines dans le sol ne s'active que lors de la détection du passage d'un bus permettant de minimiser l'exposition des piétons aux ondes magnétiques.

Mais l'obtention d'un bon rendement de la transmission d'énergie sans fil reste délicat car il dépend de la distance de transmission et du positionnement correct des bobines. De plus, ce système nécessite d'embarquer encore de nombreuses batteries.

FR 2.940.201 décrit un système de transport selon le préambule de la revendication 1. Le but de l'invention est de fournir une solution de captage d'alimentation électrique par contact au sol pour un véhicule électrique à autonomie restreinte roulant, qui permette une alimentation du véhicule en mouvement, ne dénature pas le paysage urbain et soit sans danger.

A cet effet, l'invention a pour objet un système de transport à alimentation électrique par le sol selon la revendication 1.

Suivant d'autres caractéristiques du système selon l'invention prises seules ou en combinaison :
- les moyens d'émission radio et de réception radio comportent des boucles inductives,
- le véhicule électrique est un bus,
- le véhicule électrique non guidé est équipé d'une remorque roulante solidaire de l'arrière du véhicule propre à couvrir chaque borne ponctuelle de distribution électrique,
- le véhicule électrique comporte des moyens de stockage de l'énergie électrique captée depuis les bornes ponctuelles de distribution,
- la distance séparant au moins deux bornes ponctuelles de distribution est inférieure à la longueur des segments conducteurs,
- la longueur des segments conducteurs est comprise entre 75% et 90% de la longueur du véhicule, et/ou
- le captage de l'énergie se fait lors de la circulation du véhicule électrique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de côté d'une partie du système selon l'invention, et

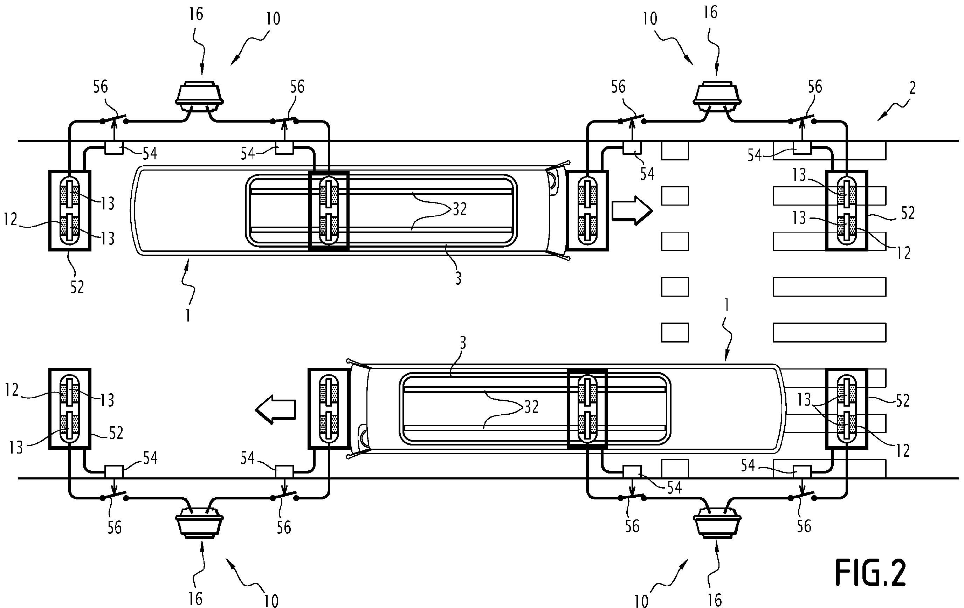

- la figure 2 est une vue de dessus du système de transport à alimentation électrique par contact au sol.

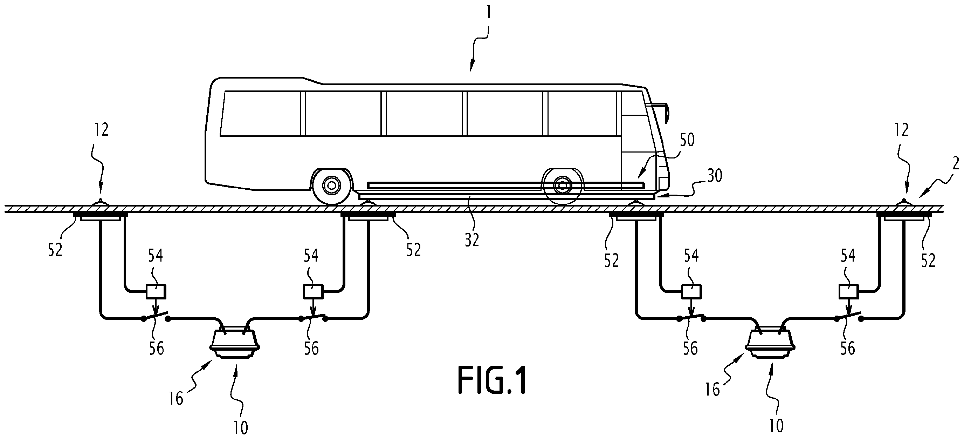

En référence à la figure 1, le système conforme à l'invention comprend un ou plusieurs véhicules électriques 1 non guidés propres à circuler sur une chaussée et un réseau d'alimentation électrique au sol 2 implanté sur la chaussée. Chaque véhicule électrique 1 non guidé est à autonomie restreinte. Il s'agit par exemple d'un véhicule électrique urbain de transport en commun tel qu'un bus.

Le véhicule est dit non guidé en ce sens qu'il n'est pas guidé par des rails sur lesquelles il roule ou encore par un rail central de guidage. Il est dirigé par un chauffeur agissant sur des roues directrices.

Le réseau d'alimentation comprend une succession de bornes ponctuelles 12 de distribution électrique réparties suivant la longueur de la chaussée sur laquelle circule le véhicule. Avantageusement, deux bornes de distribution successives sont séparées d'une distance inférieure à la longueur du véhicule.

Dans un mode de réalisation préféré, chaque borne de distribution électrique ponctuelle de courant 12 comprend une plaque ancrée dans le sol, oblongue, bombée de hauteur 10 cm, d'une longueur inférieure à la distance entre les deux roues d'un même essieu du véhicule électrique 1 et de largeur égale approximativement au quart de sa longueur.

La borne est fixée au sol avec sa longueur dans le sens de la largeur de la route.

La borne comprend deux plots conducteurs 13 disposés côte à côte dans le sens de sa longueur et séparés par une zone électriquement isolée. L'un supporte la polarité positive et l'autre la polarité négative.

Ces plots conducteurs 13 ont leur longueur disposée transversalement à la direction de circulation du véhicule. Elle est comprise entre 30 cm et 1 m.

Les bornes oblongues de distribution électrique ponctuelles de courant 12 sont disposées au sol à intervalles prédéterminés tout au long du parcours dans le sens de circulation du véhicule.

Les bornes de distribution électrique ponctuelles de courant 12 sont reliées deux par deux à des boitiers d'alimentation de puissance 16 fournissant l'énergie de traction au moteur électrique du véhicule électrique.

Les boitiers d'alimentation de puissance 16 sont disposés sous ou sur le bord de la voie de circulation du véhicule et sont reliés au réseau public de distribution électrique.

Le véhicule électrique comporte comme connu en soi un ou plusieurs moteurs électriques reliés pour leur alimentation à des moyens 30 de captage d'énergie électrique depuis les bornes 12. En outre, le véhicule comporte des moyens de stockage d'énergie reliés également aux moyens de captage 30 pour leur charge. Ces moyens de stockage sont également reliés au moteur électrique pour son alimentation, notamment lorsque le véhicule n'est pas alimenté depuis les moyens de captable 30.

Les capacités d'énergie embarquée du véhicule sont réduites au minimum et permettent, en cas de défaut d'alimentation de deux boitiers 16 consécutifs, le déplacement du véhicule jusqu'au troisième boitier.

Les moyens de captage 30 de l'énergie électrique du véhicule 1 comprennent deux collecteurs de courant propre chacun à coopérer avec un plot 13 d'une borne de distribution. Ces collecteurs sont constitués de deux segments conducteurs 32 disposés parallèlement sous le véhicule 1. Ils ont une longueur au moins égale à la moitié de la longueur du véhicule 1. La longueur des segments conducteurs 32 est supérieure à la distance séparant deux bornes de distribution 12. De préférence, la longueur des segments conducteurs est comprise entre les 75% et les 90% de la longueur du véhicule.

Les deux collecteurs de courant 32 permettent de recevoir le courant d'alimentation de traction du moteur électrique (non représenté) du véhicule 1 par contact avec les plots des bornes au sol de distribution 12.

L'écartement entre les deux segments conducteurs est égal à l'écartement des parties centrales des plots conducteurs 13.

La longueur des plots 13 est suffisamment grande pour permettre une tolérance latérale de +/- 40 cm d'écart par rapport à la trajectoire idéale du véhicule 1 tout en assurant le contact du collecteur de courant avec son segment correspondant.

Des moyens d'activation et de désactivation de l'alimentation électrique des bornes 12 sont prévus sur la chaussée et le bus 1.

Les moyens d'activation et de désactivation de l'alimentation électrique, qui garantissent la protection électrique des personnes en imposant la mise sous tension des seules bornes d'alimentation situées sous le véhicule, utilisent une technologie de communication sans fil. Ils comprennent des moyens d'émission radio 50 localisés sous le véhicule électrique 1 et de moyens récepteur radio 52 localisés autour de chaque borne de distribution électrique 12.

Les moyens d'émission 50 et de réception 52 comprennent chacun une boucle inductive.

Les moyens d'émission 50 sont propres à émettre en permanence un même signal.

Les moyens de réception sont propres à détecter ce signal et à commander un actionneur 54 actionnant des interrupteurs 56 interposés entre le boîtier de puissance 16 et la borne de distribution associée 12 sur chaque liaison d'alimentation des plots 13.

Les interrupteurs 56 sont fermés seulement lorsque les moyens de réception 52 reçoivent un signal des moyens d'émission 50, c'est-à-dire lorsque les moyens d'émission 50 et de réception 52 sont superposés.

Le captage de l'énergie électrique par le véhicule électrique non guidé 1 se fait en roulant mais aussi à l'arrêt du véhicule.

Les bornes d'alimentation 12 ne sont alimentées que lorsqu'un moyen d'émission 50, et donc le véhicule le portant, se trouve au-dessus des moyens de réception de la borne 12.

Ainsi, tout risque d'électrocution est évité.

A titre d'exemple, si le véhicule électrique a une longueur de 12 mètres, roule à 50 km/h, et si les temps de rétablissement et coupure de chaque borne de distribution électrique de courant sont respectivement de 54 ms et 305 ms, 72 boitiers d'alimentation de puissance 16 sont prévus par kilomètre.

Ce système réduit le nombre de boitiers d'alimentation de puissance 16 par kilomètre par rapport à un système d'alimentation de tramway par rail intégrés dans le sol.

Dans un autre mode de réalisation, le véhicule électrique non guidé est équipé d'une remorque roulante solidaire de l'arrière du véhicule et prolongeant artificiellement la longueur de celui-ci. La longueur de la remorque est égale à la distance parcourue par le véhicule à sa vitesse maximale pendant le temps nécessaire à la désactivation de chaque borne de distribution électrique de courant, assurant ainsi une couverture des bornes activées.

Ce mode de réalisation autorise le rallongement de la longueur des deux collecteurs de courant 30 disposés parallèlement sous le véhicule, dans la limite de la longueur du véhicule sans remorque, tout en préservant la protection électrique des personnes et permet, par voie de conséquence, de diminuer le nombre de boitiers d'alimentation de puissance 16 par kilomètre.

Le système décrit permet de s'affranchir du fil aérien d'alimentation et des mâts en bordure de voie.

Les courants de fuite sont quasiment inexistants et la probabilité de court-circuit réduite.

La simplicité de la conception et le nombre réduit de boitiers d'alimentations de puissance diminuent significativement le coût de l'infrastructure par rapport à un système de l'état de la technique et engendrent par voie de conséquence une maintenance plus légère.

## Revendications

1. Système de transport à alimentation électrique par le sol comprenant:
- un véhicule électrique non guidé (1) comportant des moyens (30) de captage de l'énergie électrique permettant de recevoir un courant par contact avec des bornes ponctuelles de distribution électrique (12) lors du roulage ;
- un réseau (2) d'alimentation électrique au sol comportant, disposées au sol suivant le parcours du véhicule (1), des bornes ponctuelles de distribution électrique (12) et des boitiers de puissance (16) d'alimentation de ces bornes (12) ;
- des moyens (50, 52) d'activation et de désactivation électrique des bornes ponctuelles de distribution électrique (12) en fonction de la position du véhicule (1),
dans lequel les moyens de captage de l'énergie électrique comprennent deux collecteurs de courant constitués de deux segments conducteurs (32) disposées parallèlement sous le véhicule et propres à coopérer avec les bornes ponctuelles de distribution électrique (12), la longueur des segments conducteurs (32) étant au moins égale à la moitié de la longueur du véhicule (1), et les moyens (50, 52) d'activation et de désactivation électrique des bornes ponctuelles de distribution électrique (12) comprennent des moyens d'émission radio (50) placés sur le véhicule électrique (1) et des moyens de réception radio (52) placés au sol et propres à commander l'activation et la désactivation électrique des bornes ponctuelles de distribution électrique (12) en fonction de la réception d'un signal des moyens d'émission (50) par les moyens de réception (52) **caractérisé en ce que** les bornes ponctuelles de distribution électrique de courant (12) sont reliées deux par deux à un même boitier d'alimentation de puissance (16).

2. Système selon la revendication 1, **caractérisé en ce que** les moyens d'émission radio (50) et de réception radio (52) comportent des boucles inductives.

3. Système selon l'une quelconque des revendications précédentes, **caractérisé en ce que** le véhicule électrique (1) est un bus.

4. Système selon l'une quelconque des revendications précédentes, **caractérisé en ce que** le véhicule électrique non guidé (1) est équipé d'une remorque roulante solidaire de l'arrière du véhicule propre à couvrir chaque borne ponctuelle de distribution électrique (12).

5. Système selon l'une quelconque des revendications précédentes, **caractérisé en ce que** le véhicule électrique (1) comporte des moyens de stockage de l'énergie électrique captée depuis les bornes ponctuelles de distribution (12).

6. Système selon l'une quelconque des revendications précédentes, **caractérisé en ce que** la distance séparant au moins deux bornes ponctuelles de distribution (12) est inférieure à la longueur des segments conducteurs (32).

7. Système selon l'une quelconque des revendications précédentes, **caractérisé en ce que** la longueur des segments conducteurs est comprise entre 75% et 90% de la longueur du véhicule.

8. Système selon l'une quelconque des revendications précédentes, **caractérisé en ce que** le captage de l'énergie se fait lors de la circulation du véhicule électrique (1).

## Patentansprüche

1. Beförderungssystem mit elektrischer Energieversorgung durch den Boden, aufweisend:
- ein nicht spurgeführtes elektrisches Fahrzeug (1) mit Mitteln (30) zur Entnahme von elektrischer Energie, welche es erlauben, einen Strom mittels Kontakts mit punktuelle Anschlüssen zur elektrischen Verteilung (12) während der Fahrt zu erhalten,
- ein Netz (2) zur elektrischen Versorgung am Boden, welches, der Fahrstrecke des Fahrzeugs (1) folgend am Boden angeordnet, punktuelle Anschlüsse zur elektrischen Verteilung (12) und Leistungskästen (16) zur Versorgung dieser Anschlüsse (12) aufweist,
- Mittel (50, 52) zur elektrischen Aktivierung und Deaktivierung der punktuellen Anschlüsse zur elektrischen Verteilung (12) in Abhängigkeit von der Position des Fahrzeugs (1),
wobei die Mittel zur Entnahme von elektrischer Energie zwei Strom-Kollektoren aufweisen, welche aus zwei Leitersegmenten (32) gebildet sind, die parallel unterhalb des Fahrzeugs angeordnet sind und dazu geeignet sind, mit den punktuellen Anschlüssen zur elektrischen Verteilung (12) zusammenzuwirken, wobei die Länge der Leitersegmente (32) mindestens gleich der Hälfte der Länge des Fahrzeugs (1) ist, und wobei die Mittel (50, 52) zur elektrischen Aktivierung und Deaktivierung der punktuellen Anschlüsse zur elektrischen Verteilung (12) aufweisen Funk-Sendemittel (50), welche an dem elektrischen Fahrzeug (1) angeordnet sind, und Funk-Empfangsmittel (52), welche am Boden angeordnet sind und dazu geeignet sind, die elektrische Aktivierung und Deaktivierung der punktuellen Anschlüsse zur elektrischen Verteilung (12) in Abhängigkeit vom Empfang eines Signals der Funk-Sendemittel (50) durch die Funk-Empfangsmittel (52) zu steuern, **gekennzeichnet dadurch, dass**
die punktuellen Anschlüsse zur elektrischen Stromverteilung (12) paarweise mit demselben Leistungsversorgungskasten (16) verbunden sind.

2. System gemäß dem Anspruch 1, **gekennzeichnet dadurch, dass** die Funk-Sendemittel (50) und die Funk-Empfangsmittel (52) Induktionsschleifen aufweisen.

3. System gemäß irgendeinem der vorhergehenden Ansprüche, **gekennzeichnet dadurch, dass** das elektrische Fahrzeug (1) ein Bus ist.

4. System gemäß irgendeinem der vorhergehenden Ansprüche, **gekennzeichnet dadurch, dass** das nicht spurgeführte elektrische Fahrzeug (1) mit einem mit dem Heck des Fahrzeugs festverbundenen, fahrbaren Anhänger ausgestattet ist, welcher dazu geeignet ist, jeden punktuellen Anschluss zur elektrischen Verteilung (12) zu bedecken.

5. System gemäß irgendeinem der vorhergehenden Ansprüche, **gekennzeichnet dadurch, dass** das elektrische Fahrzeug (1) Mittel zum Speichern der elektrischen Energie, die aus den punktuellen Anschlüssen zur Verteilung (12) entnommen wird, aufweist.

6. System gemäß irgendeinem der vorhergehenden Ansprüche, **gekennzeichnet dadurch, dass** der Abstand, welcher mindestens zwei punktuelle Anschlüsse zur Verteilung (12) trennt, kleiner als die Länge der Leitersegmente (32) ist.

7. System gemäß irgendeinem der vorhergehenden Ansprüche, **gekennzeichnet dadurch, dass** die Länge der Leitersegmente (32) zwischen 75% und 90% der Länge des Fahrzeugs beträgt.

8. System gemäß irgendeinem der vorhergehenden Ansprüche, **gekennzeichnet dadurch, dass** die Entnahme der Energie während der Fahrt des elektrischen Fahrzeugs (1) erfolgt.

## Claims

1. Transport system with electrical supply via the ground comprising:
- a non-guided electrical vehicle (1) comprising means (30) for capturing electrical power which make it possible to receive a current by contact with localised electrical distribution terminals (12) during travel;
- an electrical supply network (2) on the ground comprising, disposed on the ground according to the course of the vehicle (1), localised electrical distribution terminals (12) and power boxes (16) for supplying these terminals (12);
- means (50, 52) for electrical activation and deactivation of the localised electrical distribution terminals (12) as a function of the position of the vehicle (1),
in which the means for capturing electrical power comprise two current collectors formed of two conductive segments (32) disposed in parallel under the vehicle and able to cooperate with localised electrical distribution terminals (12), the length of the conductive segments (32) being at least equal to half the length of the vehicle (1), and the means (50, 52) for electrical activation and deactivation of the localised electrical distribution terminals (12) comprise radio emission means (50) placed on the electrical vehicle (1) and radio reception means (52) placed on the ground and able to control the electrical activation and deactivation of the localised electrical distribution terminals (12) as a function of the receipt of a signal of the emission means (50) by the reception means (52), **characterised in that**
the localised terminals for electrical distribution of current (12) are connected, in pairs, to the same power supply box (16).

2. System according to claim 1, **characterised in that** the radio emission means (50) and radio reception (52) means comprise inductive loops.

3. System according to any of the preceding claims, **characterised in that** the electrical vehicle (1) is a bus.

4. System according to any of the preceding claims, **characterised in that** the non-guided electrical vehicle (1) is equipped with a moveable trailer integral with the rear of the vehicle and able to cover each localised electrical distribution terminal (12).

5. System according to any of the preceding claims, **characterised in that** the electrical vehicle (1) comprises means for storing electrical power captured from the localised distribution terminals (12).

6. System according to any of the preceding claims, **characterised in that** the distance separating at least two localised distribution terminals (12) is less than the length of the conductive segments (32).

7. System according to any of the preceding claims, **characterised in that** the length of the conductive segments is between 75% and 90% of the length of the vehicle.

8. System according to any of the preceding claims, **characterised in that** capturing of the power takes place during travel of the electrical vehicle (1).
